(19) Europäisches Patentamt
European Patent Office
Office européen des brevets

(11) **EP 2 311 325 A2**

(12) **EUROPEAN PATENT APPLICATION**
published in accordance with Art. 153(4) EPC

(43) Date of publication:
20.04.2011 Bulletin 2011/16

(51) Int Cl.:
*A23L 1/0522* (2006.01)

(21) Application number: 09806797.8

(22) Date of filing: 22.07.2009

(86) International application number:
PCT/KR2009/004046

(87) International publication number:
WO 2010/018935 (18.02.2010 Gazette 2010/07)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 12.08.2008 KR 20080078784

(71) Applicant: CJ Cheiljedang Corporation
Seoul 100-095 (KR)

(72) Inventors:
• PARK, Jin-hee
Suwon-si
Gyeonggi-do 443-370 (KR)

• SONG, Sang-hoon
Suwon-si
Gyeonggi-do 442-190 (KR)
• LEE, Kang-pyo
Seoul 131-765 (KR)
• SHIN, Mal-shick
Gwangju 500-749 (KR)
• SONG, Ji-young
Gwangju 500-847 (KR)

(74) Representative: Owen, Deborah Jane
Dehns
St Bride's House
10 Salisbury Square
London
EC4Y 8JD (GB)

(54) **MANUFACTURE OF EDIBLE FIBER STARCH AND USEFULNESS OF SAME AS DRESSING/LIQUID FOOD**

(57) The present invention relates to a low-calorie/low-fat dressing and mayonnaise formulation for which the emulsifying stability has been improved using fibrous fiber. More specifically, it relates to a low-calorie/low-fat dressing and mayonnaise formulation wherein the dietary fiber content and emulsifying stability are improved by carrying out a high-temperature heat treatment together with ultrasonication during the cross-linking of starch, and fibrous fiber with reduced starch particle size is added to lower the fat content and improve the emulsifying stability.

Fig. 1

**Description**

[Technical Field]

The present invention relates to food, such as a low-calorie dressing, a french dressing and mayonnaise formulation which emulsifying stability are improved by using the fibrous fiber which dietary fiber content and emulsifying stability is increased and particle size is reduced, by a high-temperature heat treatment and ultrasonication during the cross-linking of starch for being suitable for a liquid food product. Such low-calorie liquid food product is preferable for the people that are worried about obesity or arteriosclerosis due to the high intake of cholesterol and calorie.

[Background Art]

Starch is the most abundant source of energy on earth and supplies energy essential to human life. On the other hand, appropriate use of starch material is needed through a regulation of high amount of energy intake. Starch can be classified into RDS (Rapidly digestible starch) that is rapidly digested in the small intestine within 20 minutes after intake; SDS (Slowly digestible starch) that is digested slowly, but completely in the small intestine between 20 to 120 minutes after intake; and RS (Resistant starch) that is not digested in the small intestine of human (Englyst et al, 1992; Eerlingen, 1993). More specifically, RS is not digested and absorbed in the small intestine of human body, but is starch or starch hydrolysate that can be degraded by enteric bacteria. In addition, RS can be classified into four types as follows according to a type of starch: RS1 which approach of enzyme is physically difficult, like seed or grain that is partially milled; RS2 having a crystal form of B-type, such as banana starch and potato starch as non-gelatinized native starch; RS3 that is formed by aging the gelatinized starch resulted from the food processing; and RS4 that is chemically modified (Asp 1992, Englyst et al., 1992). RS3 and RS4 among those types are a resistant starch that can be manufactured by the physicochemical treatment, and further researches have been conducted to produce a resistant starch using a corn starch or wheat starch and increase its yield (Sievert, D., Pomeranz, Y. (1990) Cereal Chem., 67, 217-221; Woo, K.S., Seib, P.A. (2002). Cereal Chem., 79, 819-825; Leeman, A.M., Karlsson, M.E., Eliasson, A.C., Bjorck, I.M.E. (2006) Carbohydrate Polymers, 65. 306-3113; Sang. Y., Seib, P.A. (2006) Carbohydrate Polymers, 63, 167-175; Gonzalez-Soto, R.A., Mora-Escobedo, R., Hernandez-Sanchez, H., Sanchez-Rivera, M., Bello-Perez, L.A. (2007). Food Research International, 40, 304-310). However, a study on the manufacture and application of resistant starch using a rice starch has not yet been researched.

A resistant starch can be used on the various fields in addition to a food industry, by reason of the resistant starch is effective in suppressing a colon cancer because of the increase of the production of short-chain fatty acids, such as acetic acid, propionic acid, butyric acid, and the like through its fermentation in the large intestine by the intestinal microorganism, as well as has the almost similar physiological activity to a dietary fiber, such as the prevention of constipation, the decline of blood sugar, and the like (Phillips, J., Muir, J.G., Birkett, A., Lu, Z.X., Jones, G.P., O'Dea, K., Young, G.P. (1995). Am. J. Clin. Nutr., 62, 121-130; Livesey, g., Wilkinson, J.A., Roe, M., Faulks, R., Clark, S., Brown, J.C., Kennedy, H., Elia, M. (1995). Am. J. Clin. Nutr., 61, 75-81; Silverstar, K.R., Englyst, H.N., Cummings, J.H. (1995). Am. J. Clin. Nutr., 62, 403-411; Skrabanja, V., elmstahl, H.G.M.L., Kreft, I and Bjorck, I.M.E. (2001). J. Agric. Food Chem., 49, 490-496; Fassler, C., Arrigoni, E., Venema, K., Brouns, F., Amado R. (2006). Mol. Nutr. Food Res., 50, 1220-1228), and rather the property of its food processing are good as compared to that of a dietary fiber because its physicochemical properties can be controlled according to the manufacturing method. In the present application, a starch having high activity of a dietary fiber, that the content of total dietary fiber (TDF) of a resistant starch is more than 50 % is called as a "fibrous fiber".

A fibrous fiber of a corn or wheat, which has been developed until now, has been variously applied in the confectionery, the baking, and the noodle making which is classified as a solid food based on the a starch material, but it was hard to be used in the various fields due to the disadvantage such that it can be easily separated in a type of liquid food product. There are no studied cases where fibrous fiber has been made using the conventional rice material, but it is possible for a variety of application that the particle size of the fibrous fiber of rice is significantly small (1-3 mm) thereby giving a soft texture; the starch particle has an emulsion function thereby improving a texture of liquid food product; the fat content can be decreased by using an emulsifying capacity of the fibrous fiber; and the like.

Rice is classified into a long grain rice, a medium grain rice and a short grain rice according to its grain length and shape. The long grain rice is long, slender and crumbly, and contains about 25 % of amylose. The short grain rice is round, short and stick, and contains about 17-20 % of amylose. Since amylose absorbs less water compared to amylopectin, the properties of steamed rice, such as elasticity, viscosity, gelatinization degree, aging degree, storage stability, and the like, may vary depending on the amylose content. In addition, rice may be used for other purposes according to a type of food because the processing suitability of rice may vary depending on a type or the amylose content of rice (Shin, et al., Food and Culinary Science, 139-162p, 2001).

[Disclosure]

[Technical Problem]

For this reason, the inventors promoted the present invention for developing new functional material as a high value product by giving functionality to a rice starch and promoting the consumption of rice through supplying rice as a raw material of food and bio industry and increasing the availability of a rice starch. The inventors carried out the study using the domestic and imported rice starch having various amylose contents. As a result, the inventors found that the dietary fiber content and emulsifying stability are increased and the starch particle size is decreased by carrying out a high-temperature heat treatment together with ultrasonication during the cross-linking of a rice starch, so that we thought the treated rice starch may less affect the texture and sensory properties when mixing in food and may be used in a liquid food product, such as dressing, and the like, and then completed the present invention.

Therefore, an object of the present invention is to provide a method for manufacturing a fibrous fiber having the increased dietary fiber content, the improved emulsion stability, and the reduced particle size of starch.

Another object of the present invention is to provide a low-calorie/low-fat dressing and mayonnaise formulation, in which the dietary content is increased and emulsifying stability is improved.

[Technical Solution]

To achieve the above objects, the present invention provides a method for manufacturing a fibrous fiber of rice, having the increased dietary content, the improved emulsion stability, and the reduced particle size of starch by carrying out a high-temperature heat treatment together with ultrasonication during the cross-linking of a rice starch.

In addition, the present invention provides a low-calorie/low-fat dressing and mayonnaise formulation, in which the dietary content is increased and emulsifying stability is improved, by using the fibrous fiber.

[Advantageous Effects]

The present invention can provide a fibrous fiber suitable for using in a liquid food product because the fibrous fiber has the increased dietary fiber content and has the reduced particle size, and can manufacture a low-calorie/low-fat diet food, such as a low-calorie dressing, a french dressing and mayonnaise formulation, by using the fibrous fiber.

[Description of Drawings]

The above and other objects, features and advantages of the present invention will become apparent from the following description of preferred embodiments given in conjunction with the accompanying drawings, in which:

Fig. 1 illustrates particle shapes of a rice starch and fibrous fiber using Scanning Electron Microscope. (A: DongJin No. 1 Rice Starch and Fibrous fiber, B: Thailand Rice Starch and Fibrous fiber; 1: Native starch, 2: heated RS4 (fibrous fiber) at 50˚C, 3: heated RS4 at 95˚C for 2 minutes. 4: acid hydrolyzed RS4)

Fig. 2 illustrates sizes distribution of starch particles [Native starch, Cross-linked fibrous fiber (RS4), Ultrasonicated fibrous fiber during cross-linking of starch (RS4 with sonication), fibrous fiber treated with an acid (RS4 with acid hydrolysis)].

Fig. 3 illustrates a viscosity and stability of dressing produced by adding a fibrous fiber of all kinds of various starch.

(a) Hourly viscosity measured by Brookfield Viscometer
(b) Storage stability of dressing according to a period of storage (Degree of Separation)

[Best Mode]

The present invention provides a method for manufacturing a fibrous fiber of rice, having the increased dietary fiber content, the improved emulsion stability, and the reduced particle size of starch by carrying out a high-temperature heat treatment together with ultrasonication during the cross-linking of a rice starch.

In the present application, the fibrous fiber refers to starch having high activity of a dietary fiber, that the content of total dietary fiber (TDF) of a resistant starch is more than 50 %.

A method for manufacturing a fibrous fiber of rice using a rice starch according to the present invention includes as follows: (a) separating the starch by soaking rice with alkali or distilled water; (b) heating a rice starch; (c) adding sodium sulfate ($Na_2SO_4$) and cross-linking agent to the rice starch; (d) sonicating the rice starch after adjusting pH; (e) reacting after sonicating; (f) neutralizing by adding acid after the above reaction of cross-linking; and (g) drying after washing the starch sample resulted from the above step.

The present invention may use a grain powder as starch, preferably a rice starch, and also the other starch including a cornstarch can be used, thereby obtaining the same effect. The rice starch used in the present invention was DongJin No. 1 that was obtained from KUMSUNG Nong Hyup Rice Processing Plant located at Dam-Yang Gun, Jeollanam-Do, Korea, and the imported rice used in the present invention was Thailand rice. The rice starch was purely separated from DongJin No. 1 and Thailand rice using the alkali soaking or the distilled water soaking, and then used.

The concentration of the starch separated from the above step was used as 25 to 60 %, and preferably used as 40 %. The concentration of the starch was differently setting up, depending on a type of starch, and the starch solution of high concentration within the range without the difficulty of stirring tends to show high dietary fiber content.

The starch solution was heated under shaking for 1 to 10 minutes at 80 to 95˚C. Preferably, it was heated for 2 minutes at 90 to 95 ˚C. A heating at high temperature for a short period of time makes a part of starch particle into an amorphous particle so that the starch can have the stable structure without any more increase of volume and thereby the swelling degree of the starch can be controlled.

Next, the heated starch solution was cross-linked using the cross-linking agent. The cross-linking agent includes sodium trimetaphosphate (STMP, 99.0~99.9 %) and sodium tripolyphosphate (STPP, 0.1~1.0 %), which were added as 10 % based on the starch. At this point, 10 to 12 % of sodium sulfate was added based on the dried weight of starch in order to suppress the gelatinization of starch before adding the cross-linking agent to the starch solution.

After adding the cross-linking agent, the starch solution was adjusted at pH 10 to 12, and preferably pH 11.8 by adding a base, and then was sonicated. The ultrasonication was performed for 10 to 40 minutes, and preferably 30 minutes. The ultrasonication was performed for minimizing the size of starch particle and generally used the condition that can be to averagely have the high content of the dietary fiber. At this point, the general base can be used as the above base, and preferably NaOH was used.

After sonicating, the reaction was preferably performed for 0.5 to 3 hours at 40 to 60˚C, and more preferably for 1 hour at 45 ˚C. After reacting, the neutralization was performed by adding acid to the starch solution. At this point, the general acid can be used as the above acid, and preferably HCl was used. The neutralized starch solution was washed, dried to be less than 5 % of the water content, and then grinded and sieved with 80 meshes to obtain the fibrous fiber of rice that has the increased dietary fiber content, the improved emulsion stability, and the reduced particle size.

Also, the present invention provides a low-calorie/low-fat dressing and mayonnaise formulation, in which the dietary fiber content is increased and emulsifying stability is improved, using the fibrous fiber of rice.

The present invention can provide a low-fat dressing, a french dressing, and mayonnaise formulation, in which the dietary fiber content is increased and the emulsifying stability is improved, by partially replacing the fat that supplies the emulsifying capacity in the conventional dressing and mayonnaise into the fibrous fiber of rice having the reduced size of starch particle by producing according to the above method.

The dressing and mayonnaise were manufactured by the general method, and the amount of the fibrous fiber was added as 5 to 40 % (w/w). Preferably, 9 % of fibrous fiber was used when producing the dressing and 40 % of fibrous fiber was used when producing mayonnaise.

If phase separation of the mixture is more slowly occurred, the stability to the liquid food product is high in that case, and if the storage stability is more excellent, it is considered to be more suitable material for producing the dressing. When the starchy is applied to the liquid food product, it is easily seperated, so that the conventional fibrous fiber has been applied only to the solid food product of the confectionary, the baking, and the noodle making. However, the fibrous fiber of rice having the improved stability may be produced by giving the emulsifying stability to the starch particle through a high-temperature heat treatment together with ultrasonication.

Hereinafter, the present invention will be described in detail with the following embodiment. However, the right range according to the present invention will not be limited thereto.

<Example>

**Example 1. Separation of Starch for Manufacturing Fibrous fiber of Rice**

(1) Material

The domestic rice, DongJin No. 1, which was obtained from KUMSUNG Nong Hyup Rice Processing Plant located at Dam-Yang Gun, Jeollanam-Do, Korea, and the imported rice which was obtained from Thailand, was used as the starch for the manufacture of the fibrous fiber. The starch was separated from DongJin No. 1 and Thailand rice using the alkali soaking or the distilled water soaking.

(2) Analysis of General Components in Separated Starch

A water, protein, lipid, and ash content in the rice starch separated from the above step were measured. The water content was measured using Moisture Determination Balances (HA-300, Precisa Instruments AG, Switzerland), the protein was measured using Micro Kjeldahl Method, the lipid was measured using Soxhlet apparatus, the ash was measured in a muffle furnace at 550 ˚C using dry ashing technique.

The results of the general components measured in the separated rice starch were shown in the following Table 1. The water contents in DongJin No. 1 and Thailand rice starches were 12.3 % and 13.7 %, respectively, and the ashes appeared lower values as all less than 1 %. The crude protein content in Thailand rice starch that is a long grain rice (Indica type) was higher than that of DongJin No. 1 starch that is a short grain rice (Japonica type). In addition, the crude fat in DongJin No. 1 starch was higher than that of Thailand rice starch.

Table 1.

| Analysis of General Components in Separated Starch | | | | |
| --- | --- | --- | --- | --- |
| Type of Starch | Water (%) | Crude Protein (%) | Crude Fat (%) | Ash (%) |
| DongJin No. 1 Rice Starch | 12.26 ± 0.11 | 0.16 | 0.17 | 0.11± 0.03 |
| Thailand Rice Starch | 13.65 ± 0.64 | 0.64 | 0.04 | 0.07 ± 0.02 |

(3) Physicochemical Analysis of Separated Starch

The physicochemical analysis of separated starch, such as the amylose content, the water binding capacity, the swelling capacity, the solubility, the damaged starch content, and the like were measured. The amylose content relates to the properties, such as the gelatinization temperature, degree of crystalline, the aging of the starch, and the like, and the water binding capacity, the swelling capacity, and the like relate to the activity of the starch particle.

The amylose content was measured using a method modified from the method of Williams, et al., [Williams, P.C., Kuzina, F.D., and Hlynka, I., Cereal Chem., 47, 411-420 (1970)]. After dispersing 20 mg of the starch by adding 0.5 N of KOH, it was diluted with 100 mL, 10 mL was taken in 50 mL volume of flask. Then, 5 mL of 0.1 N HCl and 0.5 mL of iodine solution was added and quantified in 50 mL. The amylose content was calculated by measuring the absorbance at 680 nm and applying in the standard curve.

The water binding capacity was measured according to the method of Medcalf and Gilles et al., [Medcalf, D.F. and Gilles, K.A., Cereal Chem. 42, 558-568 (1965)]. 0.5g of the starch was put in 50mL centrifuge tube. 20 mL of the distilled water was added and dispersed for 1 hour at room temperature, and then centrifuged at 8,000 rpm for 30 minutes to measure the weight of precipitate and calculate using the following equation.

Water binding capacity (%) = {Weight of Precipitate after Centrifuge (g) - Sample Weight (g)} x 100/ Sample Weight (g)

The swelling capacity and the solubility were measured at 30 ˚C and 80 ˚C using the method of Schoch et al., [Schoch, T.J. and Leach, w. Whole starches and modified starches. In: Method in Carbohydrate Chemistry. Vol. II. Whistler, R.L. (ed). Academic Press, New York, NY, USA, p. 106-108 (1964)]. 20 mL of the distilled water was added to 0.25 g of the sample in 50 mL of centrifuge tube and then stirred with a magnetic bar. After dispersing for 30 minutes at a certain temperature, it was then centrifuged at 30 minutes at 8,000 rpm. The swelling capacity was calculated by measuring the weight of the precipitated starch after centrifuging. The supernatant was poured into the container that was already weighted and dried, and then dried at 105 ˚C. The dried weight was measured and applied in the following equation to calculate the solubility.

$$\text{Solubility (\%)} = \text{Dried Weight of Supernatant (g) x 100/Sample Weight (g)}$$

$$\text{Swelling capacity} = \text{Weight of Precipitated Starch (g) x 100/\{Sample Weight (g)}$$
$$\text{x (100-\% Solubility)\}}$$

The damaged starch was analyzed using a damaged starch analysis enzyme kit (K-SDAM, Megazyme International Ireland Ltd., Ireland) according to the method of AACC (American Association of Cereal Chemistry). 100 mg of sample was added to a centrifuge tube and preheated, 1 mL of fungal $\alpha$- amylase (50 U/mL) was added and reacted for 10 minutes at a constant temperature water bath of 40 ˚C, and then the reaction was stopped by adding 8.0 mL of 0.2 % sulfuric acid. After centrifuging for 5 minutes at 3,000 rpm, 0.1 mL of the supernatant was taken, 0.1 mL of amyloglucosidase (2 U/0.1 mL) was added and reacted for 10 minutes at 40 ˚C. Then, 4 mL of GOPOD (Glucose determination) reagent was added and maintained for 20 minutes, and then its absorbance was measured at 510 nm. The damaged starch content was calculated according to the following equation.

$$\text{Damaged Starch (\%)} = \text{Absorbance of Enzyme Reaction Solution} \times F/W \times 8.1$$

$$F = 150 \ (\mu g \text{ of glucose})/\text{absorbance of } 150 \ \mu g \text{ glucose}$$

The measured results of the amylose content, the water binding capacity, the damaged starch content, the swelling capacity and the solubility were shown in Table 2. For the amylose content, Thailand rice starch that is Indica type was a high amylose starch as 36.8 % and DongJin No, 1 that is Japonica Type was a general nonglutinous rice starch as 15.4 %. The amylose content of starch varies depending on varieties of starches and may affect the physicochemical properties or gelatinizing and aging properties of starches [Varavinit, S., Shobsngob, S., Varanyanond, W., Chinachoti, P., Naivikul, O. Starch, 55, 410-415 (2003)].

The water binding capacities between two starches were similar and the damaged starch in DongJin No. 1 starch was higher than that of Thailand rice starch. The swelling capacity and the solubility at 30 ˚C and 80 ˚C were significantly increased according to the increase of the heating temperature, and the swelling capacity and the solubility were similar at 30 ˚C but there is a difference between samples at 80 ˚C. From the above results, it could be known that the differences of the general components, the amylose content, and the damaged starch content of the starches may affect the swelling capacity and the solubility.

Since the general components and physicochemical properties of the starch of Japonica type is different from those of the starch of Indica type, it is thought that the structures of the starches are different each other and it is expected to appear the difference between the degrees of cross-linking when producing the fibrous fiber.

Table 2.

| Physicochemical Properties of Rice Starch | | | | | | | |
|---|---|---|---|---|---|---|---|
| Type of Starch | Amylose Content (%) | Water biding capacity (%) | Damaged Starch Content (%) | Swelling capacity | | Solubility | |
| | | | | 30 ˚C | 80 ˚C | 30 ˚C | 80 ˚C |
| DongJin No. 1 Rice Starch | 15.42 | 119.7 $\pm$ 2.9 | 5.6 $\pm$ 0.6 | 2.6 $\pm$ 0.0 | 15.0 $\pm$ 1.0 | 0.9 $\pm$ 0.0 | 7.7 $\pm$ 0.7 |
| Thailand Rice Starch | 36.76 | 124.2 $\pm$ 0.8 | 1.5 $\pm$ 0.1 | 2.5 $\pm$ 0.1 | 13.6 $\pm$ 0.7 | 0.7 $\pm$ 0.2 | 10.3 $\pm$ 0.4 |

(4) Observation of Particle Shape of Fibrous fiber Using Scanning Electron Microscope

In order to observe the shapes of fibrous fiber produced from DongJin No. 1 and Thailand rice starches, the particles of rice starch and fibrous fiber were dispersed and plated with gold to have conductivity, and then observed by magnifying on 2,000 times using Scanning Electron Microscope (SEM, JEOL JSM-7500F, Japan).

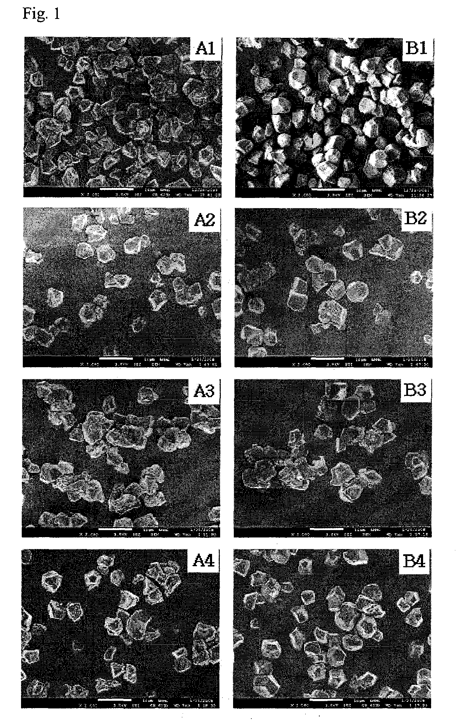

As shown in Fig. 1, there were many particles having spherical or angulated polygon shapes when the both starches are native starches.

**Example 2: Stability of Starch Particle by High-Temperature Heat Treatment before Cross-linking**

The concentration of rice starch solution was prepared in 40 % (w/w) and heated for 2 minutes in a water bath at 95˚C. The water was added to be 35 % of the starch concentration for evenly stirring in the heated starch solution. A heat treatment at high temperature for a short period of time makes the starch particle to have the stable structure due to the partial gelatinization of the starch particle and thereby total dietary fiber content was increased (Table 3).

Table 3.

| Dietary Fiber Content of Rice Starch Heat treated at High Temperature before Cross-linking | | |
|---|---|---|
| Type of Starch | Heat treatment time (Minutes) | Dietary Fiber Content (%) |
| DongJin No. 1 Rice Starch | 0 | 24.12 ± 2.48 |
| | 2 | 30.40 ± 2.50 |
| Thailand Rice Starch | 0 | 20.95 ± 1.03 |
| | 2 | 23.56 ± 2.91 |

## Example 3: Production of Fibrous fiber by ultrasonication during Cross-linking

To 35 % suspension of rice starch was added 10 % $Na_2SO_4$, 12 % STMP and STPP, and pH was adjusted at 11.8 using 1N NaOH, and then sonicated for 30 minutes in order to control the size of the fibrous fiber.

The starch mixture was reacted for 3 hours at 45 ˚C, its pH was neutralized at 6.0 using 1N HCl, and the starch mixture was centrifuged after washing four times with the distilled water. And then, the starch mixture was dried at 40 ˚C, grinded, and passed through 100 meshes sieve to finally obtain an fibrous fiber.

## Example 4: Measurement of Properties and Dietary Fiber Content of Fibrous fiber of Produced Rice

(1) Measurement of Dietary Fiber content by Approved AOAC Method

The dietary fiber content of fibrous fiber of rice according to the present invention produced in the above Example 3 was investigated. AOAC method was used as the experimental method.

40 mL of phosphate buffer solution (pH 6.0) was added to 1.0 g of sample and then well dispersed. 0.1 mL of amylase (heat stable $\alpha$-amylase, Cat No. A-3306, Sigma) was added and stirred in a boiled bath (100 ˚C) to react for 15 minutes and then cooled at room temperature. Its pH was adjusted at 7.5 by adding 0.275N NaOH, and then 0.1 mL protease (Cat No. P-3910, Sigma) (50 mg/mL phosphate buffer) was added and react at a constant temperature shaking apparatus of 60 ˚C for 30 minutes. 0.325M HCl was added to adjust to be pH 4.0~4.6, 0.1 mL of amyloglucosidase (Cat No. A-9913, Sigma) was added and then reacted at 60 ˚C for 30 minutes. In order to stop the reaction, ethanol was added to be 80 % of total alcohol concentration and then maintained for more than 1 hour. The filtration was performing using a crucible (2G3, IWAKI) containing celite that was already dried and weighted. The sample contained in the crucible was washed in order of using 95 % and 78 % of ethanol and acetone, an insoluble residue was dried at 105 ± 0.1 ˚C oven for 16 hours, and then its weight was measured. The dietary fiber content was calculated using the difference between the weight before filtrating and the weight after filtrating.

As the experimental results shown in Table 4, the dietary fiber content of the fibrous fiber that was not sonicated was 43.61% and the dietary fiber content of the fibrous fiber that was sonicated was 63.61~61.96 %. As a result, the dietary fiber content was increased to 1.4-1.5 times. The ultrasonication was performed after the starch and cross-linking agent were added and its pH was adjusted at 11.8. The dietary fiber content was increased because the starch and the cross-linking agent were evenly dispersed during the ultrasonication thereby effectively performing the cross-linking reaction.

Table 4.

| Dietary Fiber Content of Fibrous fiber of Rice Produced from Rice Starch (DongJin No. 1) by ultrasonication during Cross-linking Reaction | |
|---|---|
| Time for Ultrasonication (Minutes) | Dietary Fiber Content (%) |
| 0 | 43.61 ± 6.29 |
| 20 | 63.61 ± 0.07 |
| 30 | 61.96 ± 5.34 |

(2) Grain-size analysis of fibrous fiber produced by ultrasonication

In order to investigate grain size distributions of the fibrous fiber that was sonicated and the native starch, a grain size analyzer(BT-9300S, Dandong BAITE Instruments Ltd., China) was used for measuring. The sample was dispersed in the water, and then sonicated for 1 minute to measure.

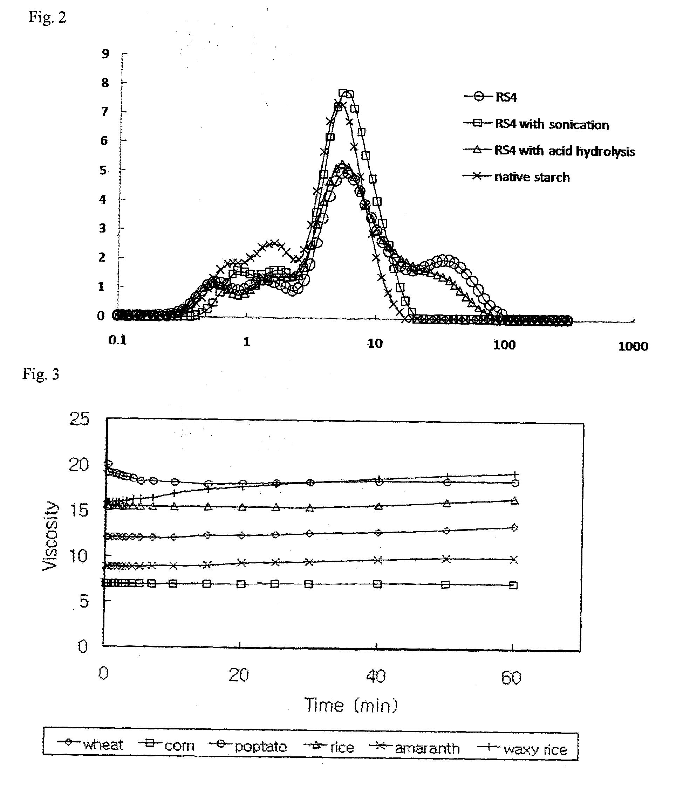

The grain size distributions of the fibrous fiber that was sonicated and the native starch were shown in Fig. 2. The grain size of the native starch were mostly distributed in the range of 1~10μm, but the grain size of the fibrous fiber produced by phosphate cross-linking is larger than that of the native starch, i.e., its main distribution was in the range of 10~100μm. However, the particle size of the fibrous fiber produced after ultrasonication were reduced so that its grain size distribution was mostly in the range of 1~10μm.

**Example 5: Manufacture of dressing added with Fibrous fiber and Measurements of its Stability and Viscosity**

As shown in the above example, the dressing was produced using the fibrous fiber produced by ultrasonication and high-temperature heat treatment, and then its viscosity and storage stability were measured.

A fat-free low-calorie dressing was produced by mixing and homogenizing 20 mL of vinegar, 3.5 g of the fibrous fiber, 5 g of sugar, and 10mL of 0.6 % gum solution. The viscosity of the dressing was measured using spindle No. 2 at 12 rpm with Brookfield viscometer, and the stability of the dressing was confirmed by measuring the degree of separation while storing for 1 month. The separation rate expressed as the proportion between total volume of the dressing and the supernatant volume of the separated dressing. The gum used for producing the dressing was xanthan gum, but also alginic acid, gellan gum, guar gum, arabic gum, carrageenan, cellulose gum, and the like can be used.

The dressings used as a control were prepared by adding the fibrous fiber produced from a cornstarch, a potato starch, glutinous rice starch and wheat starch, respectively, and then the stabilities were measured. And then the dressing prepared by adding the fibrous fiber of rice treated with ultrasonication and high-temperature heat treatment was compared to the control dressing.

The measured results of degree of separation while storing the dressing could be known that the dressing added with the fibrous fiber produced from a cornstarch was firstly separated after 1 week so that its separation rate was about 80 %, and the dressings added with the fibrous fiber produced from the wheat starch and the potato starch were separated at about 40~50 % after 4 weeks. On the other hand, the dressings added with the fibrous fiber produced from the rice starch and the glutinous rice starch were slowly started to separate and separated only at about 10 % after 4 weeks. The fibrous fiber produced from the potato starch can increase the viscosity of the dressing, but may decrease the stability of the dressing. However, the fibrous fiber produced from the rice starch increase the viscosity of the dressing and also improve the storage stability of the dressing, so that the inventors judged that the fibrous fiber produced from the rice starch is very suitable for producing the dressing (Fig. 3).

**Example 6: Manufacture of french dressing added with fibrous fiber and Measurement of its Stability**

As shown in the above example, the dressing was produced using the fibrous fiber produced by ultrasonication and high-temperature heat treatment, and then its emulsifying stability was measured.

The french dressing was produced by adding 40 % fat, 40 % vinegar, and 10 % the fibrous fiber and well mixing for each component. If the french dressing is shaking and then let it stand for a while, two layers of fat and starch are separated. The stability of the dressing was measured as the degree of separation of fat and starch layers by shaking the dressing ten times and keeping for 4 days. The dressing stability was calculated by measuring the separation rate of fat using the following equation.

Fat Separation Rate of French Dressing (%) = Height of Separated Fat Layer x 100/ Height of The Whole Dressing

Table 5 shown the results of fat amount that was separated from the starch layer after the french dressings were prepared by adding the fibrous fiber produced from the starch that were separated from corn, wheat and rice, it was shaken to mix. For the stability of the french dressing, the stabilities in the case of adding the fibrous fiber produced from corn and wheat starches were worst. The fat separation rate of the wheat starch was higher than that of the cornstarch for initial 10 minutes, and was the same as that of the cornstarch after 4 hours, because the biggest part among the wheat starch particles was firstly settled down and then the small particles were gradually settled down.

The fibrous fiber of rice produced through carrying out a high-temperature heat treatment together with ultrasonication during the cross-linking of starch make the stability of the dressing to be better as compared with the cornstarch or wheat starch. As shown in Table 5, it could be known that the separation between the starch layer and fat layer in all of the fibrous fiber produced from the rice starches was slowly occurred. It is considered that the fat in the case of the fibrous fiber treated with double ultrasonication was more separated as compared with the fibrous fiber of rice without the ultrasonication, but that is because the reduced particles by ultrasonication were not settled down, but they were dispersed in the fat layer, so that the boundary between the fat and the starch layers came down toward the lower part.

It could be known that the dressing stability in the case of adding the fibrous fiber was largely influenced by the size of the starch particle, and the fibrous fiber of rice was very effective in improving the stability of the dressing as compared with other types of starches, because the particle of the fibrous fiber of rice was small. Especially, when making the particle smaller through the ultrasonication, the dressing stability can be more increased. However, the production of liquid food product by using the general rice starch has not yet been studied intensively.

Table 5.

| Stability of French Dressing added with Fibrous fiber produced from different starches (Fat Separation Rate, %) | | | | |
|---|---|---|---|---|
| Type of French Dressing | Storage Period (Time) | | | |
| | 0.17 | 4 | 24 | 96 |
| French Dressing produced from Corn Fibrous fiber | 79.79 | 79.79 | 79.76 | 79.76 |
| French Dressing produced from Wheat Fibrous fiber | 86.90 | 79.76 | 79.76 | 79.76 |
| French Dressing produced from Fibrous fiber of Rice treated with Ultrasonication | 40.48 | 61.90 | 66.67 | 66.67 |

**Example 7: Manufacture of Mayonnaise added with Fibrous fiber and Measurements of its Viscosity and Emulsion Stability**

The mayonnaise added with the fibrous fiber under the same condition as shown in Table 6 was produced and its viscosity was measured using Rheometer (Compac-100, Sun Sci. Co., Japan). The fibrous fiber treated with the ultrasonication and high-temperature heat treatment was used as the fibrous fiber (10 % w/w) added. 0.9 % of xanthan gum was used as the gum solution, but also alginic acid, gellan gum, guar gum, arabic gum, carrageenan, cellulose gum, and the like can be used.

Table 6.

| Composition of Mayonnaise added with Fibrous fiber | | |
|---|---|---|
| Constituent | Control Mayonnaise (%) | Mayonnaise added with Fibrous fiber (%) |
| Soybean Oil | 80 | 40 |
| Yolk | 8 | 8 |
| Substitute for Fat[1) | 0 | 40 |
| Vinegar | 8 | 8 |
| Mustard | 1 | 1 |
| Salt | 2 | 2 |
| Sugar | 1 | 1 |
| [1) Substitute for fat is composed of 0.9 % gum solution and RS4 as the rate of 3:1. | | |

Table 7 illustrates the results of comparing the viscosity between a control mayonnaise and a mayonnaise added with the fibrous fiber which is produced from the rice starch through the ultrasonication, using the Rheometer. The viscosity for each samples were repeatedly measured six times and then calculated as the mean value. The measuring condition was as follows: Press/Traction, Press; Mode, 20; Dia of probe, 25 mm; Sample size, $\varphi$ 30 x 15 mm; Load cell, 2.0 kg; Table speed, 60.0 mm/min.

It could be known that the viscosity of the mayonnaise was $1.48{\sim}1.57x10^5$, and the addition of the fibrous fiber was not affected in the viscosity of the mayonnaise because there was no difference between the samples.

Table 7

| Viscosity of Mayonnaise added with Fibrous fiber | |
| --- | --- |
| Type of Mayonnaise | Viscosity (DyneS/cm$^2$) |
| Control Mayonnaise | 1,57x10$^5$ ± 9528 |
| Mayonnaise produced from Fibrous fiber treated with Ultrasonication | 1.54x10$^5$ ± 8175 |

The stability of the mayonnaise was calculated as the proportion of fat separation using the following equation after the mayonnaise was taken in the microtube, stored for 7 days at a constant-temperature oven at 45 °C, and then centrifuged for 15 minutes at 8,000 rpm.

Mayonnaise Stability (%) = Weight of Fat after Centrifuging (g) x 100/ Weight of Fat contained in Mayonnaise

Table 8 illustrates the results for measuring the stability of the mayonnaise added with the fibrous fiber. The stability of the mayonnaise was measured as the proportion between the fat separated from the mayonnaise added with the fibrous fiber and the fat added in the mayonnaise. In the case of control mayonnaise without the addition of the fibrous fiber, 37.3 % of fat was separated, and in the case of the mayonnaise added with the fibrous fiber, the fat separation rate of fat was decreased up to 17.6 %. It could be known that when the fibrous fiber was added to the mayonnaise, the physical properties, such as the viscosity, were not changed, but the stability of the emulsifying stability was largely improved.

Table 8

| Stability of Mayonnaise added with Fibrous fiber | |
| --- | --- |
| Fibrous fiber | Stability (%) |
| Control | 37.3 ± 1.18[a] |
| Fibrous fiber treated with Ultrasonication | 17.62 ± 0.92[b] |

## Claims

1. A method for producing a fibrous fiber, comprising:

   (a) separating a starch by soaking rice with alkali or distilled water;
   (b) Heat treating a rice starch separated at high temperature for a short period of time;
   (c) adding sodium sulfate ($Na_2SO_4$) and cross-linking agent to the rice starch;
   (d) sonicating the rice starch after adjusting pH by adding a base to the starch resulted from the above (c) step;
   (e) reacting after sonicating;
   (f) neutralizing by adding acid after the above reaction of cross-linking in the above (e) step; and
   (g) drying after washing the starch sample resulted from the above (f) step.

2. The method for producing the fibrous fiber of claim 1, wherein the water is added to be 25 to 60 % of starch concentration in the above (b) step, and the high-temperature heat treatment is performed at 85 °C to 95 °C for 2 to 10 minutes.

3. The method for producing the fibrous fiber of claim 1, wherein the mixture of sodium trimetaphosphate and sodium tripolyphosphate is added to be 10 to 12 % based on the starch weight as the cross-linking agent in the above(c) step and 10 % of the sodium sulfate is added based on the starch weight.

4. The method for producing the fibrous fiber of claim 1, wherein the ultrasonication is performed for 10 to 40 minutes.

5. The method for producing the fibrous fiber of claim 1, wherein the dietary fiber content by the ultrasonication is 60 to 65 %.

6. The method for producing the fibrous fiber of claim 1, wherein the particle size of the fibrous fiber by the ultrasonication is 1~10 μm.

7. A dressing composition having improved emulsifying stability, wherein the dressing composition is produced by adding the fibrous fiber that is produced through the method according to any one of claim 1 to claim 6.

8. A french dressing composition having improved emulsifying stability, wherein the french dressing composition is produced by adding the fibrous fiber that is produced through the method according to any one of claim 1 to claim 6.

9. A mayonnaise dressing composition having improved emulsifying stability, wherein the mayonnaise dressing composition is produced by adding the fibrous fiber that is produced through the method according to any one of claim 1 to claim 6.

10. The method for producing the fibrous fiber of claim 1, further comprising preparing a dough by adding 0.5 ~ 0.8 times water and using a flour instead of rice in the above (a) step; and obtaining a gluten after separating a starch with a washer.

Fig. 1

Fig. 2

Fig. 3

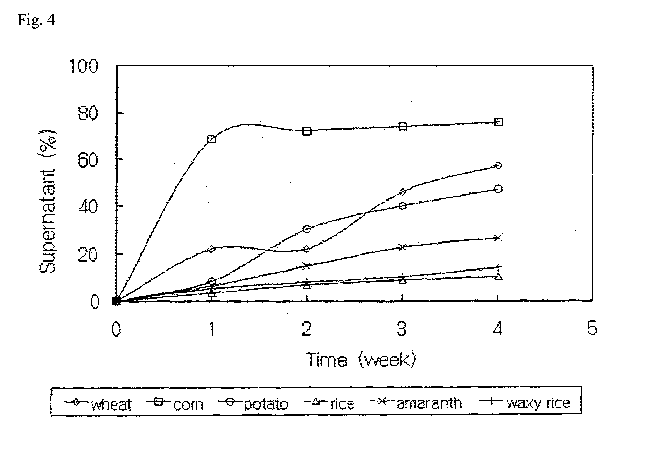

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Sievert, D. ; Pomeranz, Y.** *Cereal Chem.,* 1990, vol. 67, 217-221
- **Woo, K.S. ; Seib, P.A.** *Cereal Chem.,* 2002, vol. 79, 819-825
- **Leeman, A.M. ; Karlsson, M.E. ; Eliasson, A.C. ; Bjorck, I.M.E.** *Carbohydrate Polymers,* 2006, vol. 65, 306-3113
- **Sang. Y. ; Seib, P.A.** *Carbohydrate Polymers,* 2006, vol. 63, 167-175
- **Gonzalez-Soto, R.A. ; Mora-Escobedo, R. ; Hernandez-Sanchez, H. ; Sanchez-Rivera, M. ; Bello-Perez, L.A.** *Food Research International,* 2007, vol. 40, 304-310
- **Phillips, J. ; Muir, J.G. ; Birkett, A. ; Lu, Z.X. ; Jones, G.P. ; O'Dea, K. ; Young, G.P.** *Am. J. Clin. Nutr.,* 1995, vol. 62, 121-130
- **Livesey, g. ; Wilkinson, J.A. ; Roe, M. ; Faulks, R. ; Clark, S. ; Brown, J.C. ; Kennedy, H. ; Elia, M.** *Am. J. Clin. Nutr.,* 1995, vol. 61, 75-81
- **Silverstar, K.R. ; Englyst, H.N. ; Cummings, J.H.** *Am. J. Clin. Nutr.,* 1995, vol. 62, 403-411
- **Skrabanja, V. ; elmstahl, H.G.M.L. ; Kreft, I ; Bjorck, I.M.E.** *J. Agric. Food Chem.,* 2001, vol. 49, 490-496
- **Fassler, C. ; Arrigoni, E. ; Venema, K. ; Brouns, F. ; Amado R.** *Mol. Nutr. Food Res.,* 2006, vol. 50, 1220-1228
- **Shin et al.** *Food and Culinary Science,* 2001, 139-162
- **Williams, P.C. ; Kuzina, F.D. ; Hlynka, I.** *Cereal Chem.,* 1970, vol. 47, 411-420
- **Medcalf, D.F. ; Gilles, K.A.** *Cereal Chem.,* 1965, vol. 42, 558-568
- Whole starches and modified starches. **Schoch, T.J. ; Leach, w.** Method in Carbohydrate Chemistry. Academic Press, 1964, vol. II, 106-108
- **Varavinit, S. ; Shobsngob, S. ; Varanyanond, W. ; Chinachoti, P. ; Naivikul, O.** *Starch,* 2003, vol. 55, 410-415